# EUROPEAN PATENT APPLICATION

(11) **EP 2 787 128 A1**
(43) Date of publication of application: **08.10.2014**
(21) Application number: 11876817.5
(22) Date of filing: 30.11.2011
(51) Int. Cl.: E02F 9/14, E02F 9/00, F16L 3/22

(54) **HYDRAULIC LINE FIXING APPARATUS FOR BOOM SWING-TYPE EXCAVATORS**

(71) Applicant: Volvo Construction Equipment AB, 631 85 Eskilstuna (SE)
(72) Inventor: CHOI, Jin-Youn, Changwon-si Gyeongsangnam-do 631-150 (KR); SON, Young-Jin, Changwon-si Gyeongsangnam-do 642-768 (KR)
(74) Representative: Zimmermann, Tankred Klaus
(86) International application number: PCT/KR2011/009204
(87) International publication number: WO 2013/081212

(57) **Abstract**

A hydraulic pipe fixing apparatus for a boom-swing type excavator is disclosed, which makes hydraulic hoses for attachments and hydraulic hoses for additional option devices be arranged in predetermined positions inside a boom supporter (4). The hydraulic pipe fixing apparatus includes a clamp on which seating grooves for seating hydraulic hoses for attachments and hydraulic hoses for option devices are formed so as to arrange the hydraulic hoses for the attachments including the boom and the hydraulic hoses for the additional option devices in predetermined positions inside the boom supporter, and a cover for fixing the hydraulic hoses that is detachably fixed to the clamp by a fastening member so as to prevent the hydraulic hoses from seceding from the seating grooves and to intercept mutual contact of a boom cylinder fixing member and the hydraulic hoses for the attachments and the option devices that move toward the boom cylinder side when hydraulic fluid is supplied to the hydraulic hoses for the attachments and the option devices.

## Description

### TECHNICAL FIELD

The present invention relates to a hydraulic pipe fixing apparatus for a boom-swing type excavator. More particularly, the present invention relates to a hydraulic pipe fixing apparatus for a boom-swing type excavator in which a boom supporter is mounted on a front end portion of an upper frame to swing, which makes hydraulic hoses for attachments, such as an arm, and hydraulic hoses for additional option devices, such as a rotator, be arranged in predetermined positions inside a boom supporter, and thus can improve the workability to arrange and assemble the hydraulic hoses for attachment and option devices.

### BACKGROUND ART

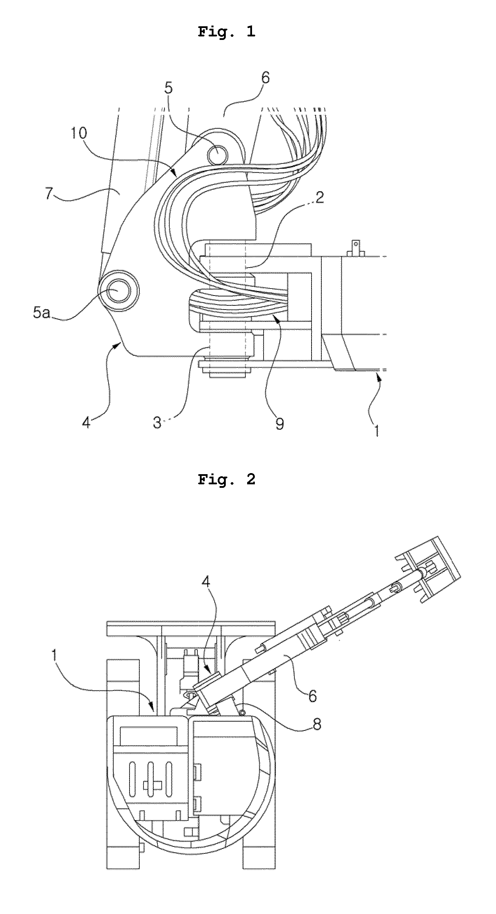

As illustrated in Figs. 1 and 2, a hydraulic pipe fixing device for a boom-swing type excavator in the related art includes a boom supporter 4 mounted on a front end portion of an upper frame 1 to swing by an upper pin 2 and a lower pin 3; a boom 6 and a boom cylinder 7 rotatably mounted on the boom supporter 4 by fixing pins 5 and 5a; a boom swing cylinder 8 having one end that is fixed to the upper frame 1 and the other end that is mounted on the boom supporter 4 to be driven to make the boom supporter 4 swing about the upper pin 2 and the lower pin 3 as center shafts; hydraulic hoses 9 for attachments supplying hydraulic fluid from a main control valve (not illustrated) MCV that is mounted on the upper frame 1 to an arm cylinder (not illustrated); and hydraulic hoses 10 for option devices supplying the hydraulic fluid to the option devices, such as quick fit, 2pcs boom, and hammer.

In this case, the hydraulic hose 10 for option devices is arranged on a side surface of the boom supporter 4 in an exposed state, and the hydraulic hose 9 for attachments is arranged to pass through a space between the upper pin 2 and the lower pin 3. Due to this, in the case where various kinds of option devices, such as a hammer, required by equipment users are added, it is difficult to arrange and assemble the hydraulic hoses for supplying the hydraulic fluid to the option devices with respect to the boom supporter 4 to lower the workability.

Further, as shown in FIG. 2, in the case where the boom 6 swings at a maximum angle set in a left or right direction according to the driving of a boom swing cylinder 8, the hydraulic hoses 9 and 10 are twisted and their bending radius becomes large according to the swing radius of the boom 6. In this case, due to frequent frictional contact with surrounding components, the hydraulic hoses 9 and 10 may be damaged. That is, due to repeated swing operations of the boom 6, external alignment states of the hydraulic hoses 9 and 10 become inferior as the hydraulic hoses 9 and 10 are twisted or bent, and this may cause the damage of the equipment in a short operation time.

Further, since it is difficult to align corresponding hydraulic hoses due to addition of various kinds of option devices required by the equipment users, the number of option devices that can be additionally mounted on the equipment may be limited. On the other hand, since the hydraulic hoses 9 and 10 are arranged on an outside to be exposed, there is a limit in protecting the hydraulic hoses 9 and 10 from external impact during traveling or working of the equipment.

### DISCLOSURE

### TECHNICAL PROBLEM

Therefore, the present invention has been made to solve the above-mentioned problems occurring in the related art, and one embodiment of the present invention is related to a hydraulic pipe fixing device for a boom-swing type excavator, which can maintain good external appearance states of hydraulic hoses according to additional option devices through arrangement of the hydraulic hoses for attachments and option devices at predetermined positions of a clamp mounted therein via a lower end portion of a boom supporter, and can prevent damage of the hydraulic hoses even in the case where the boom swings at the maximum angle through securing of a larger hose bending radius of the hydraulic hoses.

One embodiment of the present invention is related to a hydraulic pipe fixing device for a boom-swing type excavator, which can arrange corresponding hydraulic hoses at predetermined positions of a boom supporter even in the case where various kinds of option devices are added, and thus can mount the option devices having the specification required by equipment users.

One embodiment of the present invention is related to a hydraulic pipe fixing device for a boom-swing type excavator, which can improve workability in repair and assembling through pressing of hydraulic hoses by a cover for fixing the hydraulic hoses having two-stage fastening portion in the case where the hydraulic hoses are arranged at upper and lower predetermined positions of a clamp that is fixed in a boom supporter.

### TECHNICAL SOLUTION

In accordance with one aspect of the present invention, a hydraulic pipe fixing apparatus for a boom-swing type excavator, having an upper frame mounted on a lower traveling structure, a boom supporter mounted on a front end portion of the upper frame to swing and provided with a boom and a boom cylinder mounted thereon, and a boom swing cylinder making the boom supporter swing against the upper frame, the hydraulic pipe fixing apparatus includes a clamp on which seating grooves for seating hydraulic hoses for attachments and hydraulic hoses for option devices are formed so as to arrange the hydraulic hoses for the attachments including the boom and the hydraulic hoses for the additional option devices in predetermined positions inside the boom supporter; and a cover for fixing the hydraulic hoses that is detachably fixed to the clamp by a fastening member so as to prevent the hydraulic hoses from seceding from the seating grooves and to intercept mutual contact of a boom cylinder fixing member and the hydraulic hoses for the attachments and the option devices that move toward the boom cylinder side when hydraulic fluid is supplied to the hydraulic hoses for the attachments and the option devices.

According to the aspect of the present invention, the cover for fixing the hydraulic hoses has assembling holes formed thereon and composed of a first through-hole into which a head portion of the fastening member is fitted and a second through-hole formed to communicate with the first through-hole with a size that is relatively smaller than the size of the first through-hole.

The hydraulic pipe fixing apparatus according to the aspect of the present invention further includes a cover for protecting the hydraulic hoses that is detachably fixed to a bottom portion of the boom supporter by the fastening member to protect the hydraulic hoses for the attachments and the option devices that are exposed to the bottom of the boom supporter from external impact.

According to the aspect of the present invention, the hydraulic hoses for the attachments and the hydraulic hoses for the option devices are arranged to be seated on the clamp of the boom supporter through through-holes formed on a lower end portion of a front surface of the upper frame and a guide portion formed on a bottom surface of the boom supporter so as to minimize bending of the hydraulic hoses for the attachments and the option devices when the boom swings at a maximum angle set in a left or right direction.

According to the aspect of the present invention, in the case where the option devices are a quick fit, a drain, and a safety valve (ADV), the seating grooves in which the hydraulic hoses are seated are formed on an upper surface of the clamp.

According to the aspect of the present invention, the cover for fixing the hydraulic hoses includes a first pressing portion fixed to the clamp by the fastening member to prevent the hydraulic hoses from seceding from the seating grooves of the clamp; and a second pressing portion formed to extend toward a lower side of the first pressing portion to intercept the contact of the hydraulic hoses and the boom cylinder fixing member through pressing of the hydraulic hoses positioned on a lower side of the clamp toward the boom supporter side.

### ADVANTAGEOUS EFFECT

The hydraulic pipe fixing apparatus for a boom-swing type excavator as configured above according to the aspect of the present invention has the following advantages.

Since the hydraulic hoses for attachments and option devices are arranged at predetermined positions of a clamp mounted therein via a lower end portion of a boom supporter, the hydraulic hoses according to additional option devices maintain good external appearance states. Also, even in the case where the boom swings at the maximum angle, the hose bending radius is slow, and thus the hydraulic hoses can be prevented from being damaged.

Further, even in the case where various kinds of option devices are added, the corresponding hydraulic hoses can be arranged at predetermined positions of the boom supporter, and thus the option devices having the specification required by equipment users can be mounted to increase the work range using the excavator.

Further, in the case where the hydraulic hoses are arranged at the upper and lower predetermined positions of the clamp that is fixed in the boom supporter, the cover for fixing the hoses having the two-stage fastening portion can be rapidly mounted to shorten the work time to repair and assemble the hydraulic hoses.

### BRIEF DESCRIPTION OF THE DRAWINGS

The above objects, other features and advantages of the present invention will become more apparent by describing the preferred embodiments thereof with reference to the accompanying drawings, in which:
Fig. 1 is a view of a boom-swing type excavator for the extraction of a main portion in the related art;
Fig. 2 is a plan view of a general boom-swing type excavator;
Fig. 3 is a side view of a hydraulic pipe fixing apparatus for a boom-swing type excavator for the extraction of a main portion according to an embodiment of the present invention;
Fig. 4 is a perspective view of a clamp mounted in a boom supporter to arrange hydraulic hoses at predetermined positions in a hydraulic pipe fixing apparatus for a boom-swing type excavator according to an embodiment of the present invention;
Fig. 5 is a perspective view of a cover for fixing hydraulic hoses to prevent the hydraulic hoses from seceding from a clamp in a hydraulic pipe fixing apparatus for a boom-swing type excavator according to an embodiment of the present invention;
Fig. 6 is a perspective view of a cover for protecting hydraulic hoses that are exposed to a lower end portion of a boom supporter from external impact in a hydraulic pipe fixing apparatus for a boom-swing type excavator according to an embodiment of the present invention;
Fig. 7 is a view of a cover for protecting hydraulic hoses in use state in a hydraulic pipe fixing apparatus for a boom-swing type excavator according to an embodiment of the present invention;
Figs. 8A to 8C are views illustrating bending of hydraulic hoses in a neutral state or in a swing state of a boom supporter in a hydraulic pipe fixing apparatus for a boom-swing type excavator according to an embodiment of the present invention;
Fig. 9 is a view of hydraulic hoses that are arranged to be fixed to a boom by a clamp mounted on a boom supporter in a hydraulic pipe fixing apparatus for a boom-swing type excavator according to an embodiment of the present invention;
Figs. 10A to 10C are views explaining a mount order of a cover for fixing hydraulic hoses in a hydraulic pipe fixing apparatus for a boom-swing type excavator according to an embodiment of the present invention; and
Fig. 11 is a view explaining seating of hydraulic hoses on a clamp in a hydraulic pipe fixing apparatus for a boom-swing type excavator according to an embodiment of the present invention.

### * Description of Reference Numerals in the Drawing

- 1:: upper frame
- 4:: boom supporter
- 5, 21:: fixing pin
- 6:: boom
- 7:: boom cylinder
- 8:: boom swing cylinder
- 9:: hydraulic hoses for attachments
- 10:: hydraulic hoses for option devices
- 11:: seating groove
- 12:: clamp
- 13:: boom cylinder fixing member
- 14, 17:: fastening member
- 15:: cover for fixing hydraulic hoses
- 16:: assembling hole
- 18:: cover for protecting hydraulic hoses
- 19:: through-hole
- 20:: guide portion

### BEST MODE

Now, preferred embodiments of the present invention will be described in detail with reference to the accompanying drawings. The matters defined in the description, such as the detailed construction and elements, are nothing but specific details provided to assist those of ordinary skill in the art in a comprehensive understanding of the invention, and the present invention is not limited to the embodiments disclosed hereinafter.

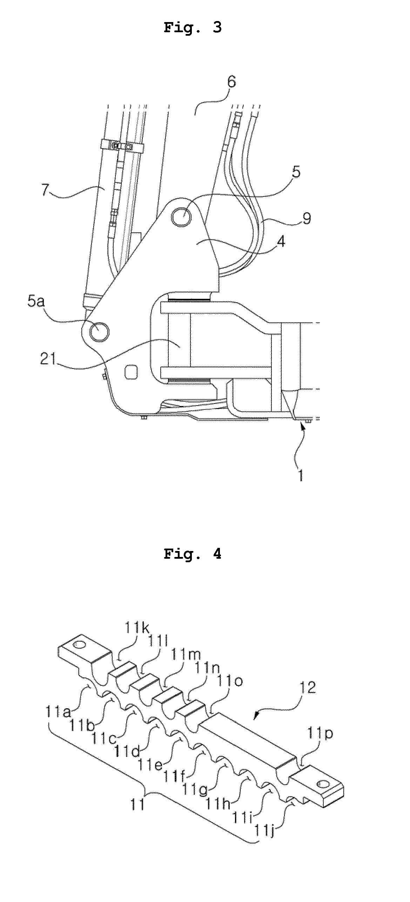

According to an embodiment of the present invention as illustrated in Figs. 3 to 11, a hydraulic pipe fixing apparatus for a boom-swing type excavator, having an upper frame 1 mounted on a lower traveling structure, a boom supporter 4 mounted on a front end portion of the upper frame 1 to swing about a fixing pin 21 as a center shaft and provided with a boom 6 and a boom cylinder 7 mounted thereon, and a boom swing cylinder 8 making the boom supporter 4 swing against the upper frame 1, the hydraulic pipe fixing apparatus includes a clamp 12 on which seating grooves 11 (11a to 11j) for seating hydraulic hoses (flexible hoses that can be bent) 9 for attachments and hydraulic hoses (flexible hoses that can be bent) 10 for option devices are formed so as to arrange the hydraulic hoses 9 for the attachments including the boom 6 and an arm and the hydraulic hoses 10 for the additional option devices, such as a rotator and a shear, in predetermined positions inside the boom supporter 4; and a cover 15 for fixing the hydraulic hoses that is detachably fixed to the clamp 12 by a fastening member 14 so as to prevent the hydraulic hoses 9 and 10 from seceding from the seating grooves 11 and to intercept mutual contact of a boom cylinder fixing member (a fixing pin and a boss for the boom cylinder) 13 and the hydraulic hoses 9 and 10 for the attachments and the option devices that move toward the side of the boom cylinder 7 when hydraulic fluid is supplied to the hydraulic hoses 9 and 10 for the attachments and the option devices.

In this case, the cover 15 for fixing the hydraulic hoses has assembling holes 16 formed thereon and composed of a first through-hole 16a into which a head portion (e.g., screw hex) of the fastening member 14 is fitted and a second through-hole 16b formed to communicate with the first through-hole 16a with a size that is relatively smaller than the size of the first through-hole 16a.

The hydraulic pipe fixing apparatus according to an embodiment of the present invention further includes a cover 18 for protecting the hydraulic hoses that is detachably fixed to a bottom portion of the boom supporter 4 by a fastening member 17 to protect the hydraulic hoses 9 and 10 for the attachments and the option devices that are exposed to the bottom of the boom supporter 4 from external impact.

The hydraulic hoses 9 and 10 for the attachments and the hydraulic hoses for the option devices are arranged to be seated on the clamp 12 of the boom supporter 4 through through-holes 19 formed on a lower end portion of a front surface of the upper frame 1 and a guide portion 20 formed on a bottom surface of the boom supporter 4 so as to minimize bending of the hydraulic hoses 9 and 10 for the attachments and the option devices when the boom 6 swings at a maximum angle set in a left or right direction.

In the case where the option devices are a quick fit, a drain, and a safety valve (ADV), the seating grooves 11 (11k to 11p) in which the hydraulic hoses 10a are seated are formed on an upper surface of the clamp 12.

The cover 15 for fixing the hydraulic hoses includes a first pressing portion 15a fixed to the clamp 12 by the fastening member 14 to prevent the hydraulic hoses 9 and 10 from seceding from the seating grooves 11 of the clamp 12; and a second pressing portion 15b formed to extend toward a lower side of the first pressing portion 15a to intercept the contact of the hydraulic hoses 9 and 10 and the boom cylinder fixing member 13 through pressing of the hydraulic hoses 9 and 10 positioned on a lower side of the clamp 12 toward the side of the boom supporter 4.

On the other hand, the configuration to make the boom supporter 4 swing against the upper frame 1 according to the driving of the above-described boom swing cylinder 8 and to drive the attachments, such as the boom, and the option devices, such as shear, by the hydraulic fluid from a main control valve MCV mounted on the upper frame 1 is a well-known technology in the corresponding field of a boom-swing type excavator, and thus the detailed explanation of the configuration and operation thereof will be omitted.

Hereinafter, a use example of a hydraulic pipe fixing apparatus for a boom-swing type excavator according to an embodiment of the present invention will be described in detail with reference to the accompanying drawings.

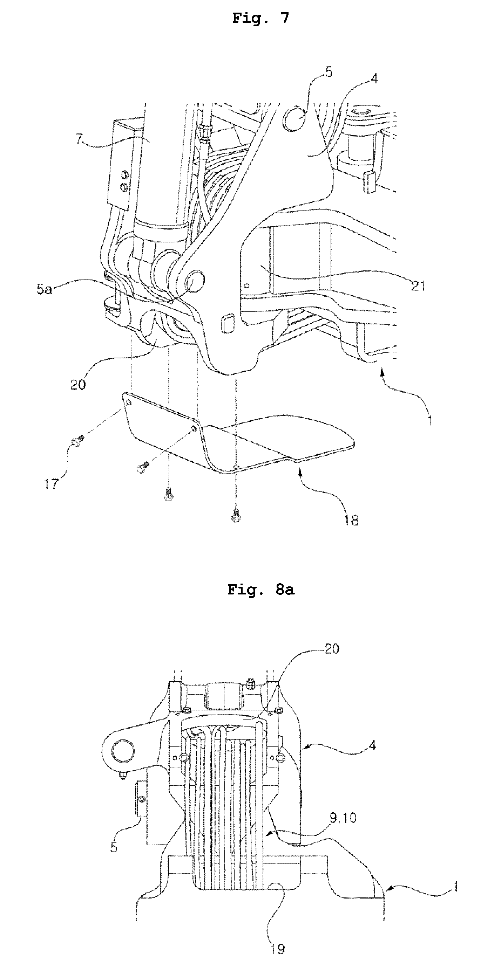

As shown in Figs. 8A to 8C, 9, and 10A to 10C, the hydraulic hoses 9 for attachments and the hydraulic hoses 10 for option devices, which supply hydraulic fluid from the main control valve MCV (not illustrated) mounted on the upper frame 1 to the attachments, such as the arm cylinder, and the option devices, such as the rotator, are arranged at predetermined positions by the clamp 12 mounted inside the boom supporter 4. In this case, the hydraulic hoses 9 for the attachments and the hydraulic hoses 10 for the option devices are connected to metal hydraulic pipes 25 for the attachments and the option devices which are mounted on an outer surface of the structure of the boom 6.

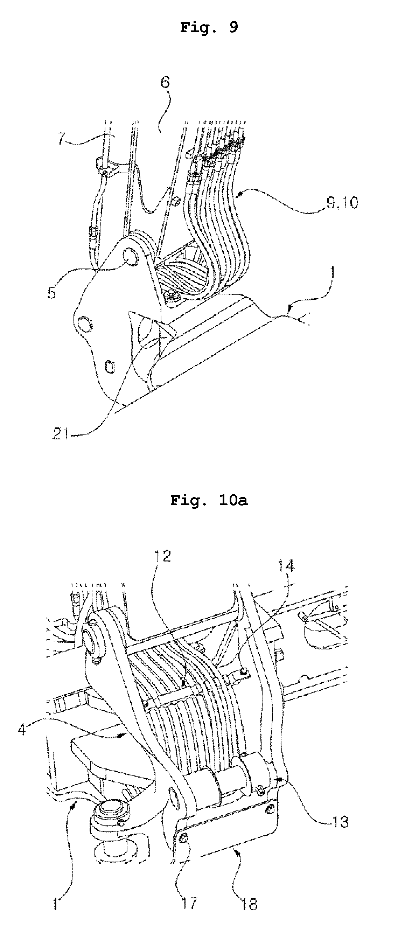

As shown in Fig. 9, the hydraulic hoses 9 for the attachments and the hydraulic hoses 10 for the option devices having inlet sides connected to the main control valve are seated in the seating grooves 11 formed on the clamp 12 mounted in the boom supporter 4 through the through hole 19 formed on the lower end portion of the front surface of the upper frame 1 and the guide portion (positioned on the lower side of the fixing pin 21 that fixes the boom supporter 4 to the upper frame 1 to swing) 20 formed on the bottom surface of the boom supporter 4 in order.

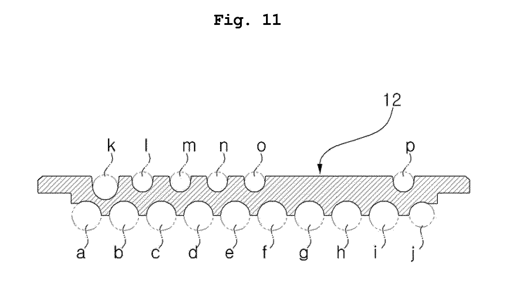

As shown in Figs. 4 and 11, a 2pcs boom, a shear, an arm, a bucket, a bucket, an arm, a shear, a 2pcs boom, a rotator, and hydraulic hoses a to j that correspond to the rotator are arranged to be seated in the seating grooves 11a to 11j that are successively formed on the bottom surface of the clamp 12 mounted in the boom supporter 4.

As shown in Fig. 11, a drain, a quick fit, a quick fit, an anti-drop valve (ADV), and hydraulic hoses k to p that correspond to a lamp are arranged to be seated in the seating grooves 11k to 11p formed on the upper surface of the clamp 12.

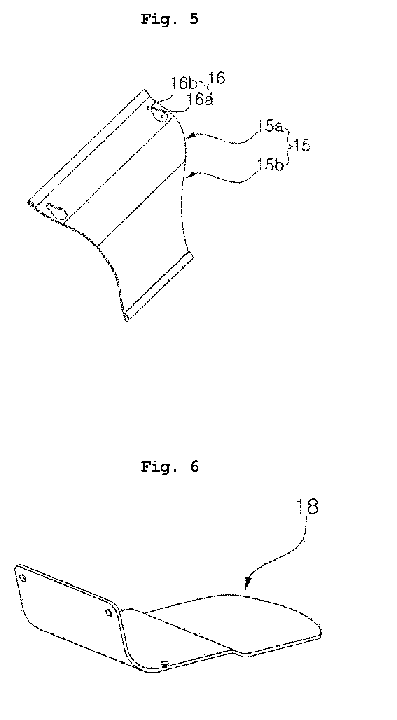

As shown in Figs. 5 and 10A to 10C, the cover 15 for fixing the hydraulic hoses is detachably fixed to the clamp 12 by the fastening member 14.

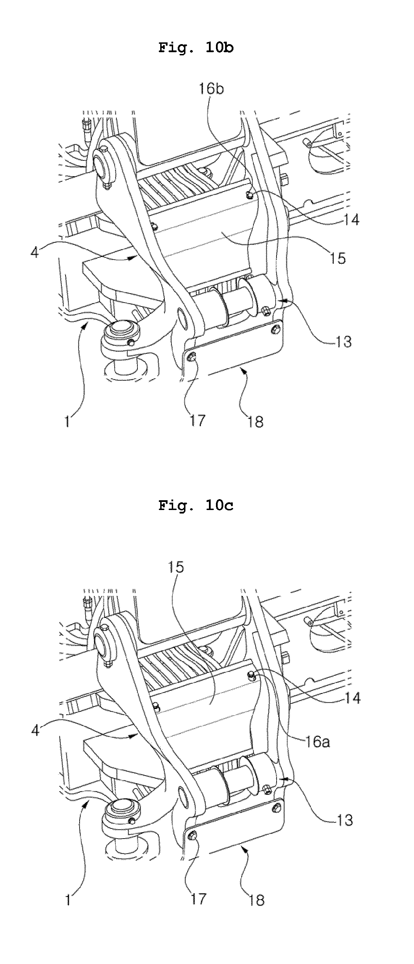

As shown in Figs. 5 and 10B, the head portion (screw hex) of the fastening member 14 (at this time, the fastening member 14 is not completely fastened, but is temporarily assembled) which fixes the clamp 12 to the boom supporter 4 is fitted into the first through-hole 16a that forms the assembling hole 16 formed on the cover 15 for fixing the hydraulic hoses.

As shown in Figs. 5 and 10C, if the cover 15 for fixing the hydraulic hoses is lowered toward the ground in a state where the cover 15 for fixing the hydraulic hoses comes in close contact with the clamp 12, the fastening member 14 is positioned in the second through-hole 16b that communicates with the first through-hole 16a. At this time, the fastening member 14 is completely tightened to be fixed.

The hydraulic hoses 9 and 10 for the attachments and the option devices move toward the boom cylinder 7 due to internal pressure that is formed when hydraulic fluid is supplied to the hydraulic hoses 9 and 10, and in this case, the hydraulic hoses 9 and 10 for the attachments and the optical devices can be prevented from seceding from the seating grooves 11 by the first pressing portion 15a of the cover 15 for fixing the hydraulic hoses fixed to the clamp 12. Further, the contact between the hydraulic hoses 9 and 10 for the attachments and the option devices, which move toward the boom cylinder 7, and the boom cylinder fixing member (fixing pin and a boss for boom cylinder) 13 can be intercepted by the second pressing portion of the cover 15 for fixing the hydraulic hoses. Through this, the hydraulic hoses 9 and 10 can be prevented from being caught in the fixing pin for the boom cylinder and twisted. Further, the hydraulic hoses 9 and 10 that are exposed to an upper side of the boom supporter 4 can be protected from external impact by the cover 15 for fixing the hydraulic hoses.

As shown in Figs. 6 and 7, the cover 18 for protecting the hydraulic hoses is fixed to the guide portion 20 that is formed on the bottom surface of the boom supporter 4 to pass the hydraulic hoses 9 and 10 therethrough by the fastening member 17. Through this, the hydraulic hoses 9 and 10 pass through the through-hole 19 formed on the front surface of the upper frame 1 and the guide portion 20 of the boom supporter 4, and thus the hydraulic hoses 9 and 10 exposed to the lower side of the boom supporter 4 can be protected from the external impact.

As shown in Fig. 11, since the hydraulic hoses 9 for the attachments, such as the boom and the arm, and the hydraulic hoses 10 for the additional option devices are arranged in the predetermined positions in the boom supporter 4, the work time required to arrange the hydraulic hoses for the additional option devices can be shortened even if various kinds of option devices are added according to the equipment user's request.

As shown in Fig. 8A, if the boom swing cylinder 8 is in an initial driving state and the boom 6 is positioned in the same direction as the forward and backward direction of the equipment, the hydraulic hoses 9 and 10 for the attachments and the option device pass through the through-hole 19 of the upper frame 1 and then enter into the boom supporter 4 along the guide portion 20 of the boom supporter 4 in a state where the hydraulic hoses 9 and 10 are not bent.

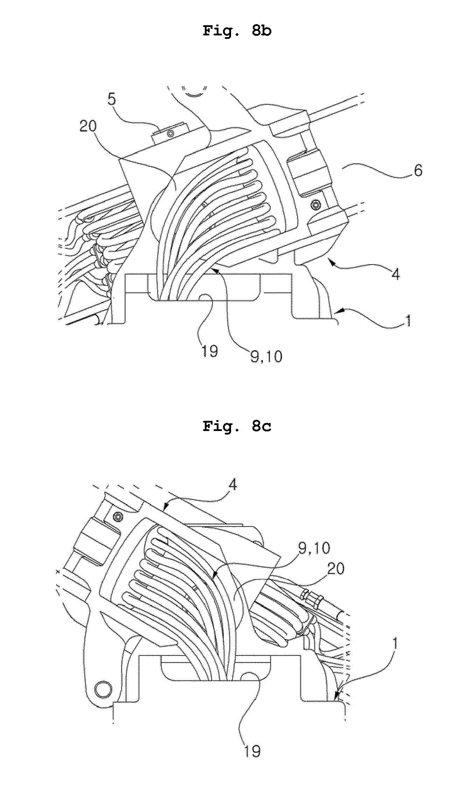

As shown in Fig. 8B, due to the expansion driving of the boom swing cylinder 8, the boom 6 swings at the maximum angle in the right direction (based on the front surface of the equipment) of the equipment. At this time, the hydraulic hoses 9 and 10 for the attachments and the option device pass through the through-hole 19 of the upper frame 1 and then enter into the boom supporter 4 along the guide portion 20 of the boom supporter 4 in a state where the hydraulic hoses 9 and 10 are bent in the right direction in the drawing. Through this, the bending of the hydraulic hoses 9 and 10 for the attachments and the option device becomes slow.

As shown in Fig. 8C, due to the contraction driving of the boom swing cylinder 8, the boom 6 swings at the maximum angle in the left direction (based on the front surface of the equipment) of the equipment. At this time, the hydraulic hoses 9 and 10 for the attachments and the option device pass through the through-hole 19 of the upper frame 1 and then enter into the boom supporter 4 along the guide portion 20 of the boom supporter 4 in a state where the hydraulic hoses 9 and 10 are bent in the left direction in the drawing. Through this, the bending of the hydraulic hoses 9 and 10 for the attachments and the option device becomes slow.

As shown in Figs. 8A to 8C, the hydraulic hoses 9 and 10 for the attachments and the option devices are arranged at the predetermined positions by the clamp 12 mounted in the boom supporter 4, and even if the boom 6 swings at the set maximum angle in the left or right direction through the driving of the boom swing cylinder 8, the hydraulic hoses 9 and 10 are guided to move gently to prevent the excessive bending of the hydraulic hoses 9 and 10.

### INDUSTRIAL APPLICABILITY

As apparent from the above description, according to the present invention having the above-described configuration, since the hydraulic hoses for the attachments and the option devices are arranged at the predetermined positions of the clamp mounted inside the boom supporter through the lower end portion of the boom supporter, the hydraulic hoses can be well arranged in accordance with the additional option devices. Further, even if the boom swings at the set maximum angle, the hydraulic hoses can move gently. Even if various kinds of option devices are added according to the equipment user's request, the corresponding hydraulic hoses can be arranged at the predetermined positions of the boom supporter.

## Claims

1. A hydraulic pipe fixing apparatus for a boom-swing type excavator, having an upper frame mounted on a lower traveling structure, a boom supporter mounted on a front end portion of the upper frame to swing and provided with a boom and a boom cylinder mounted thereon, and a boom swing cylinder making the boom supporter swing against the upper frame, the hydraulic pipe fixing apparatus comprising:
a clamp on which seating grooves for seating hydraulic hoses for attachments and hydraulic hoses for option devices are formed so as to arrange the hydraulic hoses for the attachments including the boom and the hydraulic hoses for the additional option devices in predetermined positions inside the boom supporter; and
a cover for fixing the hydraulic hoses that is detachably fixed to the clamp by a fastening member so as to prevent the hydraulic hoses from seceding from the seating grooves and to intercept mutual contact of a boom cylinder fixing member and the hydraulic hoses for the attachments and the option devices that move toward the boom cylinder side when hydraulic fluid is supplied to the hydraulic hoses for the attachments and the option devices.

2. The hydraulic pipe fixing apparatus according to claim 1, wherein the cover for fixing the hydraulic hoses has assembling holes formed thereon and composed of a first through-hole into which a head portion of the fastening member is fitted and a second through-hole formed to communicate with the first through-hole with a size that is relatively smaller than the size of the first through-hole.

3. The hydraulic pipe fixing apparatus according to claim 1, further comprising a cover for protecting the hydraulic hoses that is detachably fixed to a bottom portion of the boom supporter by the fastening member to protect the hydraulic hoses for the attachments and the option devices that are exposed to the bottom of the boom supporter from external impact.

4. The hydraulic pipe fixing apparatus according to claim 1, wherein the hydraulic hoses for the attachments and the hydraulic hoses for the option devices are arranged to be seated on the clamp of the boom supporter through through-holes formed on a lower end portion of a front surface of the upper frame and a guide portion formed on a bottom surface of the boom supporter so as to minimize bending of the hydraulic hoses for the attachments and the option devices when the boom swings at a maximum angle set in a left or right direction.

5. The hydraulic pipe fixing apparatus according to claim 1, wherein in the case where the option devices are a quick fit, a drain, and a safety valve (ADV), the seating grooves in which the hydraulic hoses are seated are formed on an upper surface of the clamp.

6. The hydraulic pipe fixing apparatus according to claim 1, wherein the cover for fixing the hydraulic hoses comprises:
a first pressing portion fixed to the clamp by the fastening member to prevent the hydraulic hoses from seceding from the seating grooves of the clamp; and
a second pressing portion formed to extend toward a lower side of the first pressing portion to intercept the contact of the hydraulic hoses and the boom cylinder fixing member through pressing of the hydraulic hoses positioned on a lower side of the clamp toward the boom supporter side.
